Europäisches Patentamt

European Patent Office

Office européen des brevets

(11) Veröffentlichungsnummer: **0 104 456**
**B1**

(12) **EUROPÄISCHE PATENTSCHRIFT**

(51) Int. Cl.⁴: **H 04 M 11/08**

(45) Veröffentlichungstag der Patentschrift:
**18.01.89**

(21) Anmeldenummer: **83108428.0**

(22) Anmeldetag: **26.08.83**

---

(54) **Sichtschirmtelefon.**

---

(30) Priorität: **30.08.82 DE 3232198**

(43) Veröffentlichungstag der Anmeldung:
**04.04.84 Patentblatt 84/14**

(45) Bekanntmachung des Hinweises auf die Patenterteilung:
**18.01.89 Patentblatt 89/3**

(84) Benannte Vertragsstaaten:
**AT CH DE FR GB IT LI NL SE**

(56) Entgegenhaltungen:
**US-A- 4 150 254**
**ELECTRONICS INTERNATIONAL, Band 53, Nr. 26, Dezember 1980, Seiten 84,86, New York, US; K. SMITH: "Low-cost terminal aims to enlarge the market for viewdata services"**
**TELCOM REPORT, Band 6, Nr. 2, April 1983, Seiten 143-148, Passau, DE; P. KAUFMANN et al.: "Das Bildschirmtelefon BITEL T3210"**
**NATIONAL TELECOMMUNICATIONS CONFERENCE, New Orleans, Louisiana, US, 29. November - 3. Dezember 1981, Band 3/4, Seiten F2.3.1-F2.3.5, IEEE, New York, US; W.M. SCHELL: "Control software for an experimental teleterminal"**

(73) Patentinhaber: **Siemens Aktiengesellschaft Berlin und München, Wittelsbacherplatz 2, D-8000 München 2 (DE)**

(72) Erfinder: **Kaufmann, Peter, Ing. grad., Lindenweg 1, D-8031 Gilching (DE)**
Erfinder: **Noé, Werner, Dipl.-Ing., Am Schlosspark 14, D-8035 Gauting (DE)**
Erfinder: **Gilch, Gerhard Dr.rer.pol., Dipl.-Kfm., Ing.-grad., Heinleinstrasse 12, D-8000 München 71 (DE)**

---

**Beschreibung**

Die Erfindung betrifft ein Sichtschirmtelefon mit einem Modem zur Herstellung einer Verbindung über eine Fernsprechleitung mit einer Bildschirmtextzentrale, wobei das Modem neben einer Wähleinrichtung eine Leitungsüberwachungseinrichtung sowie eine Schalteinrichtung enthält (siehe z.B. US-A-4 150 254).

Der Bildschirmtextdienst wird seit einiger Zeit bekanntlich mit einem Modem im Gebiet der Deutschen Bundespost betrieben.

Das Modem enthält eine abschaltbare Wähleinrichtung, über die automatisch die Bildschirmtextzentrale angerufen wird, wenn das Modem über eine Steuerleitung angeschaltet wird. Es kann dabei eine einzige Rufnummer wählen.

Weiter enthält das Modem eine Leitungsüberwachungseinrichtung, die verhindert, dass das Modem auf Modembetrieb umschaltet, wenn eine nachgeschaltete Fernsprechleitung belegt sein sollte.

Es ist Aufgabe der Erfindung, die Einsatzmöglichkeit des Sichtschirmtelefons dahingehend zu erweitern, dass das Sichtschirmtelefon andere Bildschirmtextzentralen anwählen kann.

Die Aufgabe wird gemäss der Erfindung dadurch gelöst, dass wahlweise entweder die Wähleinrichtung und die Leitungsüberwachung des Modems oder eine Wähleinrichtung und eine Leitungsüberwachung des Sichtschirmtelefons angeschaltet ist, dass eine Grundschaltung vorgesehen ist, die so ausgeführt ist, dass die eingebaute Wähleinrichtung so über einen Umschalter an die Fernsprechleitungen anschaltbar ist, dass sowohl in aufgelegtem als auch in abgehobenem Zustand des Handapparatekörpers des Sichtschirmtelefons gewählt werden kann und damit entweder eine Fernsprechverbindung oder eine Verbindung zu einer Bildschirmtextzentrale aufbaubar ist.

Normalerweise ist jedes Telefon mit einer Wähleinrichtung ausgestattet. Diese Wähleinrichtung ist nun über die Umschalteeinrichtung an die Fernsprechleitung anschaltbar, wobei das Gerät automatisch auf Modembetrieb umschaltet, wenn die Verbindung mit einer Bildschirmtextzentrale hergestellt ist.

Es kann zweckmässig sein, dass eine weitere Fernsprechleitung an die Wähleinrichtung angeschlossen ist, wobei die Wähleinrichtung über die Umschalteeinrichtung wahlweise mit der Fernsprechleitung zur Herstellung einer normalen Fernsprechverbindung oder der Fernsprechleitung zur Anwahl einer Bildschirmtextzentrale schaltbar ist.

Damit besteht die Möglichkeit, während eines Telefongesprächs Daten aus der Bildschirmtextzentrale abzurufen, ohne das Telefongespräch dabei zu unterbrechen.

Im Folgenden sei die Erfindung anhand von zwei Figuren näher erläutert.

Es zeigen

Fig. 1 eine Prinzipschaltung mit einer Fernsprechleitung und

Fig. 2 eine Prinzipschaltung mit zwei Fernsprechleitungen.

Mit dem öffentlichen Fernsprechnetz ist das Sichtschirmtelefon über eine Fernsprechleitung a/b verbunden. Über diese Leitung kann sowohl mit der Bildschirmtextzentrale als auch mit anderen Fernsprechteilnehmern eine Verbindung aufgenommen werden.

Im dargestellten Zustand steht der im Modem M angeordnete Schalter S1 in Stellung 1, 3 und stellt so eine Verbindung zwischen a/b Leitung und einer Leitungsüberwachung LÜ(M) her.

Soll nun die Bildschirmtextzentrale gerufen werden, so wird durch die BTX-Taste eine Steuerleitung S aktiviert, der Schalter S1 in die Stellung 1, 2 umgeschaltet und über die Wähleinrichtung WE(M) des Modems die Bildschirmtextzentrale gerufen.

Soll jedoch eine andere z.B. interne Bildschirmtextzentrale gerufen werden, so wird ein auf manuelle Wahl eingestelltes Modem und eine extern zum Modem eingerichtete Wähleinrichtung WE benutzt. Ein Umschalter U überbrückt die Kontakte 1, 3 und die Signale gelangen über den Gabelumschalter S2 über die Kontakte 1, 3 und den Schalter S1 über die Kontakte 1, 3 an die Fernsprechleitung a, b. Nach Herstellung der Verbindung und des entsprechenden BTX-Signaltones schaltet der Schalter S1 unter Überbrückung der Kontakte 1, 2 um auf Modembetrieb zum Empfang des Bildschirmtextes.

Bei normalem Fernsprechbetrieb steht die Wähleinrichtung WE über den Umschalter U und dessen Kontakte 2, 3, dem Gabelumschalter S2 über die Kontakte 1, 2 direkt über die Leitungsüberwachung LÜ(M) mit den a/b-Adern in Verbindung.

An das Sichtschirmtelefon ist ausserdem ein weiterer sogenannter A2-Fernsprecher anschliessbar, der über die Leitungsüberwachung LÜ den Schalter S2 und den Schalter S1 mit den a/b-Adern verbunden ist. Die Leitungsüberwachung LÜ verhindert eine Umschaltung auf Modembetrieb, wenn die geschaltete Leitung La2, Lb2 belegt ist.

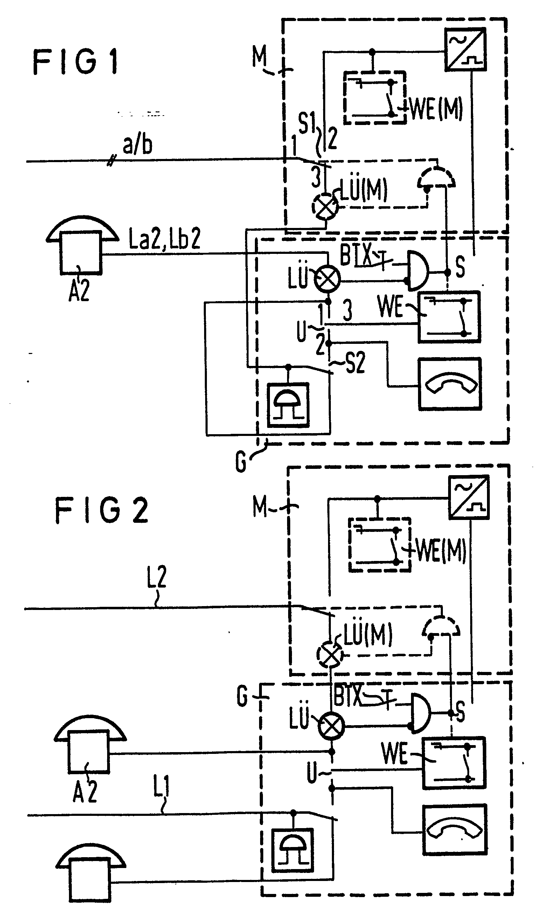

Nach der in Fig. 1 dargestellten Schaltungsanordnung ist alternativ entweder normaler Fernsprechbetrieb oder Bildschirmtextbetrieb möglich, da das Sichtschirmtelefon mit nur einer Fernsprechleitung verbunden ist.

Soll nun Bildschirmtextbetrieb und Fernsprechbetrieb gleichzeitig möglich sein, um z.B. Daten aus der Bildschirmtextzentrale abzurufen, ohne eine Telefongespräch zu unterbrechen, so ist die Schaltung nach Fig. 2 anzuwenden. Dazu wird die gleiche Grundschaltung G wie in Fig. 1 benutzt, die sich nur durch die äussere Beschaltung unterscheidet.

Dabei ist eine Leitung L1 für den Fernsprechverkehr und eine Leitung L2 für den Bildschirmtext vorgesehen. Die Funktion des Modems M ist dieselbe wie die in Fig. 1 beschriebene. Über eine Wähleinrichtung WE und den in die obere Stellung gebrachten Umschalter U ist ein Korrespondieren mit verschiedenen Bildschirmtextzentralen möglich. Es ist jedoch auch über die Leitung L1 ein normaler Fernsprechverkehr ohne Unterbrechung der Verbindung zur Bildschirmtextzentrale möglich.

**Patentansprüche**

1. Sichtschirmtelefon mit einem Modem (M) zur Herstellung einer Verbindung über eine Fernsprechleitung (a/b) mit einer Bildschirmtextzentrale, wobei das Modem neben einer Wähleinrichtung (WE(M)) eine Leitungsüberwachungseinrichtung (LÜ(M)) sowie eine Schalteinrichtung (S) enthält, dadurch gekennzeichnet, dass wahlweise entweder die Wähleinrichtung (WE(M)) und die Leitungsüberwachung (LÜ(M)) des Modems oder eine Wähleinrichtung (WE) und eine Leitungsüberwachung (LÜ) des Sichtschirmtelefons angeschaltet ist, dass eine Grundschaltung (G) vorgesehen ist, die so ausgeführt ist, dass die eingebaute Wähleinrichtung (WE) so über einen Umschalter (U) an die Fernsprechleitungen anschaltbar ist, dass sowohl in aufgelegtem als auch in abgehobenem Zustand des Handapparatekörpers des Sichtschirmtelefons gewählt werden kann und damit entweder eine Fernsprechverbindung oder eine Verbindung zu einer Bildschirmtextzentrale aufbaubar ist.

2. Sichtschirmtelefon nach Anspruch 1, dadurch gekennzeichnet, dass an die Grundschaltung eine weitere Fernsprechleitung (L2) die Wähleinrichtung (WE) angeschlossen ist, wobei die Wähleinrichtung über die Umschalteeinrichtung (U) wahlweise mit der Fernsprechleitung (L1) zur Herstellung einer normalen Fernsprechverbindung oder der Fernsprechleitung (L2) zur Anwahl einer Bildschirmtextzentrale schaltbar ist.

**Claims**

1. Video display telephone having a modem (M) for establishing a connection via a telephone line (a/b) to a videotex central system, the modem containing, in addition to a dialling device (WE(M)), a line monitoring device (LÜ(M)) as well as a switching device (S), characterized in that optionally either the dialling device (WE(M)) and the line monitor (LÜ(M)) of the modem or a dialling device (WE) and a line monitor (LÜ) of the video display telephone are connected, in that a basic circuit (G) is provided which is designed so that the integrated dialling device (WE) can be connected via a changeover switch (U) to the telephone lines in such a manner that it is possible to dial with the handset body of the video display telephone both in the on-hook and in the off-hook state, and that hence either a telephone connection or a connection to a videotex central system can be established.

2. Video display telephone according to Claim 1, characterized in that a further telephone line (L2) and the dialling device (WE) are connected to the basic circuit, the dialling device being connectable via the changeover device (U) either to the telephone line (L1) for establishing a normal telephone connection or to the telephone line (L2) for dialling up a videotex central system.

**Revendications**

1. Téléphone à écran de visualisation, comprenant un modem (M) pour établir une liaison avec un central de télétex par une ligne téléphonique (a/b), le modem contenant, outre un dispositif de sélection (WE(M)), un dispositif de surveillance de ligne (LÜ(M)) ainsi qu'un dispositif de commutation (S), caractérisé en ce que, au choix, soit le dispositif de sélection (WE(M)) et le dispositif de surveillance de ligne (LÜ(M)) du modem, soit un dispositif de sélection (WE) et un dispositif de surveillance de ligne (LÜ) du téléphone à écran de visualisation sont connectés, et qu'il comprend un montage de base (G) réalisé de telle sorte que le dispositif de sélection (WE) incorporé peut être connecté aux lignes téléphoniques, par un commutateur (U), de manière que des numéros puissent être composés aussi bien lorsque le combiné du téléphone à écran de visualisation est raccroché que lorsqu'il est décroché et que, ainsi, on puisse établir, soit une liaison téléphonique, soit une liaison avec un central de télétex.

2. Téléphone à écran de visualisation selon la revendication 1, caractérisé en ce que le dispositif de sélection (WE) est raccordé par le montage de base à une ligne téléphonique supplémentaire (L2), de manière que le dispositif de commutation (U) permette la connection du dispositif de sélection, au choix, à la ligne téléphonique (L1) pour l'établissement d'une liaison téléphonique normale ou à la ligne téléphonique (L2) pour la composition du numéro d'un central de télétex.

FIG 1

FIG 2

5